(19) Europäisches Patentamt
European Patent Office
Office européen des brevets

(11) **EP 4 618 230 A1**

(12) **EUROPEAN PATENT APPLICATION**
published in accordance with Art. 153(4) EPC

(43) Date of publication:
**17.09.2025 Bulletin 2025/38**

(51) International Patent Classification (IPC):
*H01M 10/42* (2006.01)    *H01M 10/48* (2006.01)
*B60L 3/00* (2019.01)    *B60L 58/10* (2019.01)

(21) Application number: **24826050.7**

(52) Cooperative Patent Classification (CPC):
Y02E 60/10

(22) Date of filing: **10.01.2024**

(86) International application number:
**PCT/KR2024/000478**

(87) International publication number:
**WO 2024/262725 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.06.2023 KR 20230079238**

(71) Applicant: **LG Energy Solution, Ltd.
Seoul 07335 (KR)**

(72) Inventors:
• **CHOI, Jang Hyeok
Daejeon 34122 (KR)**
• **KIM, Kyeongmin
Daejeon 34122 (KR)**

(74) Representative: **Plasseraud IP
104 Rue de Richelieu
CS92104
75080 Paris Cedex 02 (FR)**

(54) **BATTERY PACK AND VEHICLE SYSTEM**

(57)    The present disclosure relates to a battery pack and a vehicle system, and the battery pack includes a detection voltage measurement unit including a first resistor and a second resistor connected in series between a power supply supplying a certain voltage and a ground terminal, a case surrounding the first resistor and the second resistor, and a variable resistor connected in parallel between one end and the other end of the second resistor and located outside the case, and a coolant leakage diagnosis unit configured to diagnose a leakage of a coolant when a detection voltage of a contact point of the first resistor and the second resistor falls within a reference range calculated based on a conductivity of the coolant.

FIG. 4

**EP 4 618 230 A1**

**Description**

**[Technical Field]**

Cross-reference to related application

This application claims priority to and the benefit of Korean Patent Application No. 10-2023-0079238 filed in the Korean Intellectual Property Office on June 20, 2023, the entire contents of which are incorporated herein by reference.
The present disclosure relates to a battery pack and a vehicle system that may detect leakage of a coolant.

**[Background Art]**

Batteries are used in a variety of fields, and, recently, fields where batteries have been widely used, such as electric vehicles or smart grid systems, often require large capacities. In order to increase the capacity of a battery pack, a method of increasing the capacity of a secondary battery, that is, a battery cell itself, but in this case, there are disadvantages in that the effect of increasing the capacity is not significant, there are physical limitations to expanding the magnitude of the secondary battery, and management is inconvenient. Therefore, generally, a battery pack in which multiple battery modules are connected in series and parallel is widely used.
Such a battery pack often includes a battery management system (BMS) that manages a battery module. Moreover, the BMS may monitor the temperature, voltage, current, etc. of the battery module, and control a balancing operation, a cooling operation, a charging operation or a discharging operation, etc. of the battery pack based on a status of the monitored battery module.
The temperature of the battery module, that is, the temperature of the secondary battery, is a factor that significantly affects the performance of the battery pack. In general, a battery pack may operate efficiently when the temperature of the secondary battery is distributed at an appropriate temperature. For example, when the temperature of the secondary battery is too high, the performance of the battery pack may deteriorate due to a reduction in the stability of a negative crystal lattice of the secondary battery, etc. Therefore, the temperature of the secondary battery needs to be appropriately controlled.
Generally, in order to appropriately maintain the temperature of the secondary battery, the battery pack may be configured that a coolant is provided inside the battery pack and flows around the secondary battery. However, when the coolant leaks, the amount of the circulating coolant may decrease, which may cause a problem in which the temperature of the secondary battery is not maintained. In addition, there may be a problem that may cause an electrical accident in which components inside the battery pack are damaged due to leakage of the coolant.

**[Disclosure]**

**[Technical Problem]**

The present disclosure attempts to provide a battery pack and a vehicle system capable of detecting leakage of a coolant with a simple configuration.

**[Technical Solution]**

According to an embodiment, a battery pack includes a detection voltage measurement unit including a first resistor and a second resistor connected in series between a power supply supplying a certain voltage and a ground terminal, a case surrounding the first resistor and the second resistor, and a variable resistor connected in parallel between one end and the other end of the second resistor and located outside the case, and a coolant leakage diagnosis unit configured to diagnose a leakage of a coolant when a detection voltage of a contact point of the first resistor and the second resistor falls within a reference range calculated based on a conductivity of the coolant.
The variable resistor may include a first detection node connected to the one end and a second detection node spaced apart from the first detection node by a certain distance and connected to the other end, and the first detection node and the second detection node may be electrically connected to each other by the coolant.
The coolant leakage diagnosis unit may diagnose a non-leakage of the coolant when a magnitude of the detection voltage corresponds to a first reference value that is a certain voltage greater than a maximum value of the reference range.
The coolant leakage diagnosis unit may further include a control unit configured to diagnose whether the coolant leaks based on the magnitude of the detection voltage, and an RC filter circuit configured to receive the detection voltage and transmit the detection voltage to the control unit.

The battery pack may further include a plurality of detection voltage measurement units, and the plurality of detection voltage measurement units may be installed by being spaced from each other by a certain distance from a bottom surface to a top surface of the battery pack.

The detection voltage measurement unit may further include a first capacitor connected between a contact point between the power supply and the first resistor and the ground terminal.

According to another embodiment, a vehicle system includes a vehicle control unit configured to set a reference range which is a reference for determining a leakage of a coolant based on a conductivity of the coolant, and a battery pack configured to diagnose the leakage of the coolant based on the reference range, and the battery pack includes a detection voltage measurement unit including a first resistor and a second resistor connected in series between a power supply supplying a certain voltage and a ground terminal, a case surrounding the first resistor and the second resistor, and a variable resistor connected in parallel between one end and the other end of the second resistor and located outside the case, and a coolant leakage diagnosis unit configured to diagnose the leakage of the coolant when a detection voltage of a contact point of the first resistor and the second resistor falls within the reference range calculated based on the conductivity of the coolant.

The variable resistor may include a first detection node connected to the one end and a second detection node spaced apart from the first detection node by a certain distance and connected to the other end, and the first detection node and the second detection node may be electrically connected to each other by the coolant.

The coolant leakage diagnosis unit may diagnose a non-leakage of the coolant when a magnitude of the detection voltage corresponds to a first reference value that is a certain voltage greater than the maximum value of the reference range.

The coolant leakage diagnosis unit may further include a control unit configured to diagnose whether the coolant leaks based on the magnitude of the detection voltage, and an RC filter circuit configured to receive the detection voltage and transmit the detection voltage to the control unit.

**[Advantageous Effects]**

The present disclosure may effectively detect leakage of the coolant with a simple configuration.

**[Description of the Drawings]**

FIG. 1 is a block diagram explaining a vehicle system according to an embodiment.

FIG. 2 is a conceptual diagram explaining the relationship between components shown in FIG. 1.

FIG. 3 is a circuit diagram explaining in detail configurations of a detection voltage measurement unit and a coolant leakage diagnosis unit of FIG. 1.

FIG. 4 is an example diagram for explaining a situation in which a coolant leaks according to an embodiment.

FIG. 5 is a conceptual diagram for explaining a reference range and a first reference value according to an embodiment.

**[Mode for Invention]**

Hereinafter, the embodiments disclosed in the present specification will be described in detail with reference to the accompanying drawings, but same or similar components are given the same or similar reference numerals, and redundant descriptions thereof will be omitted. The suffixes "module" and/or "part" for components used in the following description are given or mixed in consideration of only the ease of drafting the specification, and do not have meanings or roles distinct from each other by themselves. In addition, in describing the embodiments disclosed in the present specification, when it is determined that detailed descriptions of related known technologies may obscure the gist of the embodiments disclosed in the present specification, the detailed description thereof will be omitted. In addition, the accompanying drawings are only for easy understanding of the embodiments disclosed in the present specification, do not limit the technical idea disclosed in the present specification, and should be understood to include all changes, equivalents or substitutes included in the spirit and scope of the present disclosure.

The terms including an ordinal number, such as first, second, etc., may be used to describe various components, but the components are not limited by the terms. The terms are used only for the purpose of distinguishing one component from another.

It will be understood that when a component is referred to as being "connected to" or "coupled to" another component, the component may be connected or coupled to the other component or intervening components may be present. In contrast, when a component is referred to as being "directly connected to" or "directly coupled to" another component, there are no intervening components present.

It will be further understood that the terms "comprises" and/or "comprising," when used in the present specification, specify the presence of stated features, integers, steps, operations, components, and/or parts, but do not preclude the presence or addition of one or more other features, integers, steps, operations, components, parts, and/or combinations thereof.

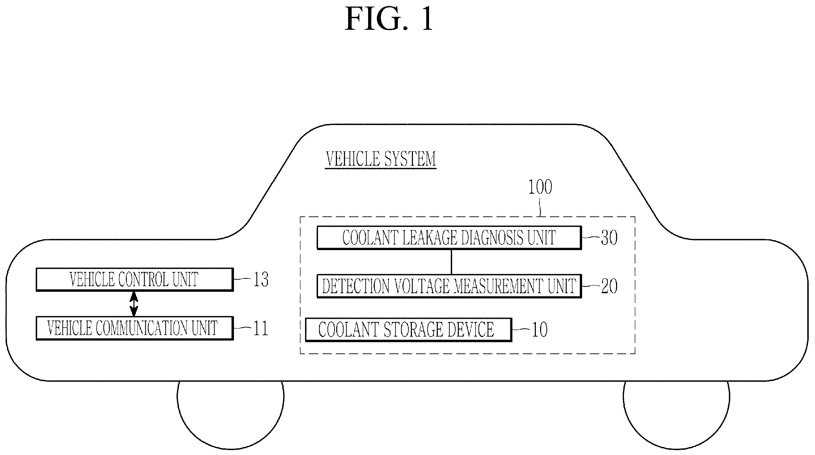

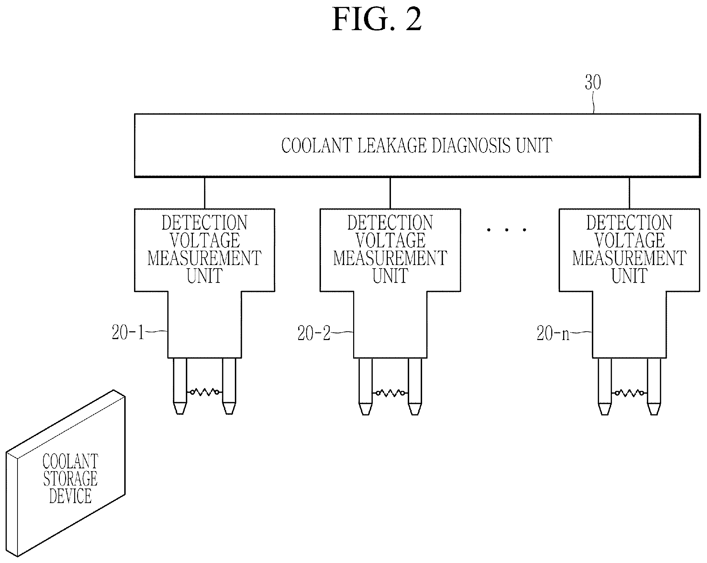

FIG. 1 is a block diagram explaining a vehicle system according to an embodiment. FIG. 2 is a conceptual diagram explaining the relationship between components shown in FIG. 1.

Referring to FIG. 1, a vehicle system 1 includes a vehicle communication unit 11, a vehicle control unit 13, and a battery pack 100.

The vehicle communication unit 11 may communicate with the battery pack 100 to transmit various commands and receive various data. For example, the vehicle communication unit 11 may transmit a reference range and a first reference value set by the vehicle control unit 13 to the battery pack 100. For another example, the vehicle communication unit 11 may receive a message corresponding to a coolant leak diagnosis, etc.

The vehicle control unit 13 may set the reference range that serves as a reference for determining coolant leakage based on the conductivity of a coolant. In addition, the vehicle control unit 13 may set the first reference value that serves as a reference for determining a non-leakage event of the coolant based on a circuit inside the battery pack 100, etc.

The battery pack 100 includes a coolant storage device 10, a detection voltage measurement unit 20, and a coolant leakage diagnosis unit 30.

Although not shown in FIG. 1, the battery pack 100 may further include a battery module (not shown). The battery module may include a plurality of battery cells (not shown). In an embodiment, the battery cell may be a rechargeable cell, and may include a positive electrode, a negative electrode, and an electrolyte. In an embodiment, a certain number of battery cells may be connected in series or parallel to form the battery module.

The coolant storage device 10 may be a device storing the coolant that absorbs heat from the battery cells to prevent the battery cells from overheating. For example, the coolant storage device 10 may be located close to the battery module. For another example, when the battery pack 100 includes a plurality of battery modules, the coolant storage device 10 may be configured in the form of a plate located between the plurality of battery modules. However, the coolant storage device 10 is not limited thereto, and may be formed in various shapes at various locations inside the battery pack 100.

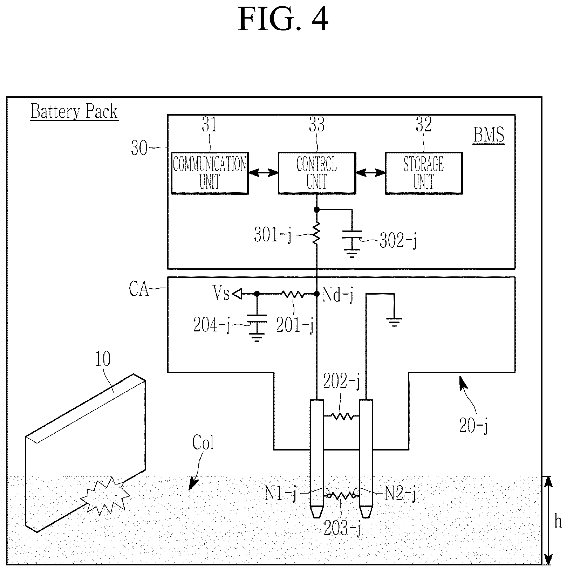

The detection voltage measurement unit 20 is a device detecting the coolant leaked from the coolant storage device 10. According to an embodiment, the detection voltage measurement unit 20 may be located adjacent to an inner bottom surface of the battery pack 100. For example, referring to FIG. 4, when the coolant leaked from the coolant storage device 10 fills in the inner bottom surface of the battery pack 100 to a certain height h, the detection voltage measurement unit 20 may be installed in a location to be in contact with the leaked coolant.

Referring to FIG. 2, according to an embodiment, the battery pack 100 may include a plurality of detection voltage measurement units 20-1 and 20-n. The plurality of detection voltage measurement units 20-1 and 20-n may be installed at various locations inside the battery pack 100. For example, when the plurality of detection voltage measurement units 20-1 and 20-n are installed to be spaced from each other at a certain distance from the inner bottom surface of the battery pack 100 to a top surface, the height of the leaked coolant may be inferred. FIG. 2 shows that the plurality of detection voltage measurement units 20-1 and 20-n are installed at substantially the same height, but the plurality of detection voltage measurement units 20-1 and 20-n are not limited thereto and may be installed at different heights as described above. In addition, the plurality of detection voltage measurement units 20-1 and 20-n may be installed at various locations inside the battery pack 100 where coolant detection is required.

The coolant leakage diagnosis unit 30 may detect whether the coolant is leaked based on the electrical signal received from the detection voltage measurement unit 20. For example, the coolant leakage diagnosis unit 30 may be a battery management system (BMS). However, the present disclosure is not limited thereto, and a separate control unit other than the BMS or the vehicle control unit 13 of the vehicle system 1, etc. may perform a function of the coolant leakage diagnosis unit 30.

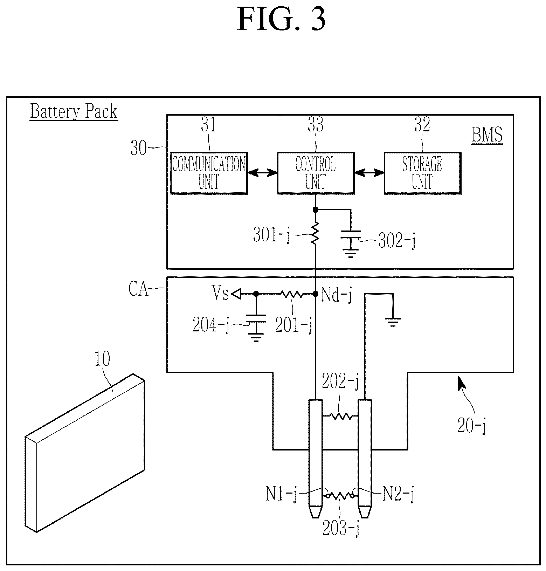

Hereinafter, together with FIGS. 3 and 4, the configurations of the detection voltage measurement unit 20 and the coolant leakage diagnosis unit 30 will be described in detail.

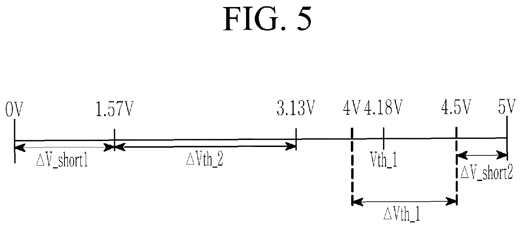

FIG. 3 is a circuit diagram explaining in detail configurations of a detection voltage measurement unit and a coolant leakage diagnosis unit of FIG. 1. FIG. 4 is an example diagram for explaining a situation in which a coolant leaks according to an embodiment. FIG. 5 is a conceptual diagram for explaining a reference range and a first reference value according to an embodiment.

Hereinafter, in FIGS. 3 and 4, a single detection voltage measurement unit 20 is described, but the corresponding description may be equally applied to the plurality of detection voltage measurement units 20-1 and 20-n in FIG. 2. Hereinafter, reference numeral "20-j" is used to indicate a specific detection voltage measurement unit among the plurality of detection voltage measurement units 20-1 and 20-n, and "201-j, 204-j, Nd-j, 202-j, N1-j, N2-j, and 203-j" are respectively used to indicate a first resistor, a first capacitor, a voltage measurement node, a second resistor, a first detection node, a second detection node, and a variable resistor included in the corresponding detection voltage measurement unit 20-j.

The detection voltage measurement unit 20-j includes the first resistor 201-j, the second resistor 202-j, the variable resistor 203-j, and a case CA that accommodates the first resistor 201-j and the second resistor 202-j therein. In an embodiment, the detection voltage measurement unit 20-j may further include the first capacitor 204-j.

In an embodiment, power supplying a certain voltage Vs may be generated from a voltage of the battery module (e.g., 110 in FIG. 1). To this end, the detection voltage measurement unit 20-j may further include a voltage regulator (not shown). The voltage Vs may be, for example, 5V. It is assumed that in an embodiment, when the voltage Vs is set to 5 V, the first resistor 201-j, the second resistor 202-j, and the first capacitor 204-j respectively use 100 kΩ, 510 kΩ, and 100 nF. However, the embodiment is not limited thereto, and various resistance values, etc. may be set according to various designs.

The first capacitor 204-j may bypass a noise component of power supply to the ground. That is, the first capacitor 204-j may be mounted on the detection voltage measurement unit 20-j for a noise removal filter or a bypass function.

The case CA may be configured such that the first resistor 201-j and the second resistor 202-j are accommodated therein, and the variable resistor 203-j is located outside. Then, when the coolant leaks, the first resistor 201-j and the second resistor 202-j do not contact the coolant, and only the variable resistor 203-j may contact the coolant. In FIGS. 2 to 4, the case CA is configured to be separated from the coolant leakage diagnosis unit 30 by a certain distance, but the case CA is not limited thereto, and may be formed integrally with the coolant leakage diagnosis unit 30.

The first resistor 201-j may be connected between the power supply supplying the certain voltage Vs and the voltage measurement node Nd-j, and the second resistor 202-j may be connected between the voltage measurement node Nd-j and the ground. That is, the first resistor 201-j and the second resistor 202-j may be connected in series between the power supply and the ground. In addition, the variable resistor 203-j may be connected in parallel between one end and the other end of the second resistor 202-j.

The variable resistor 203-j may not form a current path when the coolant does not leak from the coolant storage device 10, and form the current path by the leaked coolant when the coolant leaks from the coolant storage device 10.

Referring to FIG. 3, two detection nodes N1 and N2 spaced apart from each other. The variable resistor 203-j may include the first detection node N1 connected to one end of the second resistor 202-j and the second detection node N2 spaced apart from the first detection node N1 by a certain distance and connected to the other end of the second resistor 202-j. According to an embodiment, when the coolant in the coolant storage device 10 leaks, the first detection node N1 and the second detection node N2 may be electrically connected to each other by the coolant.

As shown in FIG. 3, when the coolant does not leak, the magnitude of a resistor between the first detection node N1 and the second detection node N2 may be infinite ($\infty$). That is, current may not flow between the first detection node N1 and the second detection node N2. Accordingly, the first resistor 201-j and the second resistor 202-j may be serialized between the voltage Vs and the ground. Then, the magnitude of detection voltage at the voltage measurement node Nd-j, which is a contact point of the first resistor 201-j and the second resistor 202-j, may be calculated from Equation (1) below.

$$V_{Nd} = \frac{R_{202}}{R_{201} + R_{202}} \times V_s$$

- Equation 1

Equation (1) may correspond to the previously well-known equation for calculating the magnitude of voltage between both ends of some resistors among a plurality of resistors connected in series. In Equation (1), V_Nd is a detection voltage V_Nd when the coolant does not leak, Vs is the voltage Vs of the power supply, R_201 is the first resistor 201-j, and R_202 is the second resistor 202-j. Assuming that the magnitudes of the first resistance 201-j, the second resistance 202-j, and the voltage Vs are 100 kΩ, 510 kΩ, and 5 V, the magnitude of the detection voltage V_Nd may be calculated to be about 4.18 V by Equation (1) above. That is, when the coolant does not leak, the magnitude of the detection voltage V_Nd is about 4.18 V.

As shown in FIG. 4, a coolant Col may leak from the coolant storage device 10 for various reasons. When the coolant Col is located between the first detection node N1 and the second detection node N2, the first detection node N1 and the second detection node N2 may be electrically connected to each other through the coolant Col. At this time, a resistance value of the variable resistor 203-j may be determined by components included in the coolant Col. Hereinafter, for example, when the coolant Col is located between the first detection node N1 and the second detection node N2, it is assumed that the magnitude of the variable resistor 203-j is 250 kΩ. However, the magnitude of the variable resistor 203-j is not limited thereto, and may be determined based on the conductivity determined by various components included in the coolant Col.

When the coolant Col is located between the first detection node N1 and the second detection node N2, the variable resistor 203-j may be connected in parallel to the second resistor 202-j. The magnitude of a parallel resistor with respect to the second resistor 202-j and the variable resistor 203-j may be calculated using Equation (2) below.

$$R_{pall} = \frac{R_{202} \times R_{203}}{R_{202} + R_{203}}$$

- Equation 2

Equation (2) may correspond to the previously widely known equation for calculating the magnitude of the parallel resistor. In Equation (2), R_202 is the second resistor 202-j, R_203 is the variable resistor 203-j, and R_pall is the parallel resistor. Previously, since it is assumed that the magnitudes of the second resistor 202-j and the variable resistor 203-j are respectively 510 kΩ and 250 kΩ, the magnitude of the parallel resistor R_pall may be calculated to be about 167.8 kΩ using Equation (2).

Referring again to FIG. 4, the first resistor 201-j and the parallel resistor R_pall may be connected in series between the power supply and the ground, and the magnitude of a detection voltage at the voltage measurement node Nd-j, which is a contact point of the first resistor 201-j and the parallel resistor R_pall, may be calculated from Equation (3) below.

$$V'_{Nd} = \frac{R_{pall}}{R_{201} + R_{pall}} \times V_s$$

-Equation 3

Equation (3) may correspond to Equation (1) described above. In Equation (3), V'_Nd corresponds to the detection voltage V_Nd when the coolant Col leaks. Assuming that the magnitude of the first resistor 201-j, the parallel resistor R_pall, and the voltage Vs are respectively 100 kΩ, 167.8 kΩ, and 5 V, the magnitude of a detection voltage V'_Nd may be calculated to be about 3.13 V by Equation (3) above. In other words, when the coolant Col leaks, the magnitude of the detection voltage V'_Nd is about 3.13 V.

Referring again to FIG. 3, in a state where the coolant Col does not leak, since air exists between the first detection node N1 and the second detection node N2, and the conductivity of the air is close to '0', the magnitude of the variable resistor 203-j may be regarded as being infinite (∞). Referring again to FIG. 4, when the conductive coolant Col leaks, the coolant Col exists between the first detection node N1 and the second detection node N2, and the first detection node N1 and the second detection node N2 are electrically connected to each other through the coolant Col. That is, since the current flows between the first detection node N1 and the second detection node N2, a state in which no current relatively flows is changed to a state in which the current flows, and the magnitude of the variable resistor 203-j may be regarded as being lowered.

The coolant Col may include water (50 % to 60 %), an organic compound (ethylene glycol), a preservative, a PH regulator, and other metals (e.g., Si, Na, etc.)

For example, when three types of the coolant Col are widely sold on the market, it is assumed that the magnitude of the variable resistor 203-j is 250 kΩ, 100 kΩ, 50 kΩ, etc.

(Table 1)

| coolant leaks? | first resistor (R_201) | second resistor (R_202) | variable resistor (R_203) | detection voltage ($V_{Nd}$) |
|---|---|---|---|---|
| No | 100kΩ | 510kΩ | 0kΩ | 4.179V |
| Yes | 100kΩ | 510kΩ | 250kΩ | 3.133V |
| Yes | 100kΩ | 510kΩ | 100kΩ | 2.277V |
| Yes | 100kO | 510kΩ | 50kΩ | 1.564V |

Table 1 above summarizes the magnitude of the detection voltage V'_Nd according to the magnitude of the variable resistor 203-j. This is calculated based on the magnitude of the variable resistor 203-j calculated based on the components of the coolant Col actually used in the market. That is, the magnitude of the variable resistor 203-j may vary depending on the type of the coolant Col.

For example, when the magnitude of the variable resistor 203-j is 250 kΩ, if the coolant Col does not leak, the magnitude of the detection voltage V_Nd may be is about 4.18 V, and if the coolant Col leaks, the magnitude of the detection voltage V_Nd may be about 3.13 V. For another example, when the magnitude of the variable resistor 203-j is 100 kΩ, if the coolant Col does not leak, the magnitude of the detection voltage V_Nd may be about 4.18 V, and if the coolant Col leaks, the magnitude of the detection voltage V_Nd may be about 2.28 V. For another example, when the magnitude of the variable resistor 203-j is 50 kΩ, if the coolant Col does not leak, the magnitude of the detection voltage V_Nd may be about 4.18 V, and if the coolant Col leaks, the magnitude of the detection voltage V_Nd may be about 1.57 V. That is, if the coolant Col does not leak, the magnitude of the detection voltage V_Nd may be constant at about 4.18 V, and if the coolant Col leaks, the magnitude of the detection voltage V_Nd may vary depending on the magnitude of the variable resistor 203-j.

According to an embodiment, if the coolant Col does not leak, the magnitude of the detection voltage V_Nd may be substantially the same as a first reference value Vth_1, and if the coolant Col leaks, the magnitude of the detection voltage V_Nd may fall within a reference range △Vth_2.

The reference range △Vth_2 may be calculated as a voltage period in which various magnitudes of the variable resistor 203-j determined by various types of the coolant Col are reflected. For example, referring to FIG. 5, assuming that the magnitudes of the first resistor 201-j, the second resistor 202-j, the voltage Vs, and the first capacitor 204-j are respectively 100 kΩ, 510 kΩ, 5V, and 100nF, the first reference value Vth_1 may be 4.18 V, and the reference range △Vth_2 may correspond to 1.57 V or more and 3.13 V or less. According to an embodiment, a lower limit of the reference range △Vth_2 may be determined based on the minimum value among the magnitudes of the variable resistor 203-j calculated by each of a plurality of coolants, and an upper limit of the reference range △Vth_2 may be determined based on the maximum value among the magnitudes of the variable resistor 203-j. At this time, the first reference value Vth_1 and the reference range △Vth_2 may be determined by reflecting a certain error. In addition, the first reference value Vth_1 may be a certain voltage greater than the maximum value of the reference range △Vth_2.

Referring again to FIG. 3, the coolant leakage diagnosis unit 30 includes RC filter circuits 301-j and 302-j, a communication unit 31, a control unit 33, and a storage unit 32. According to an embodiment, the coolant leakage diagnosis unit 30 may be configured as a BMS of the battery pack.

The detection voltage V_Nd may be transmitted to the RC filter circuits 301-j and 302-j. The detection voltage V_Nd that has passed through the RC filter circuits 301-j and 302-j may be input to the control unit 33. According to an embodiment, the coolant leakage diagnosis unit 30 further includes an analog/digital converter (ADC) (not shown) for converting the detection voltage V_Nd of the detection voltage measurement unit 20-j into a digital signal that may be received by the control unit 33.

Referring to FIGS. 3 and 4, the RC filter circuits 301-j and 302-j may be configured with a number n corresponding to each of the plurality of detection voltage measurement units 20-1 and 20-n. FIG. 3 shows that the RC filter circuits 301-j and 302-j are included in the coolant leakage diagnosis unit 30, but the RC filter circuits 301-j and 302-j are not limited thereto, and may be configured to be included in the detection voltage measurement unit 20-j.

The communication unit 31 may communicate with a vehicle system 1 to receive various control signals and transmit information about whether the coolant Col leaks. For example, the communication unit 31 may receive information about the first reference value Vth_1 and the reference range △Vth_2 from the vehicle system 1.

The control unit 33 may diagnose leakage of the coolant Col and occurrence of a defect in the detection voltage measurement unit 20-j based on the detection voltage V_Nd transmitted from the detection voltage measurement unit 20-j.

Referring to FIG. 5, for example, when the detection voltage V_Nd falls within the reference range △Vth_2, the control unit 33 may diagnose that the coolant Col has leaked. For another example, when the detection voltage V_Nd is substantially the same as the first reference value Vth_1, the control unit 33 may diagnose that the coolant Col does not leak and a state of the detection voltage measurement unit 20-j is also normal. For another example, when the detection voltage V_Nd falls within a first defect diagnosis range corresponding to 0 V or more and the lower limit of the reference range △Vth_2 or less, the control unit 33 may diagnose a defect that the power supply and the voltage measurement node Nd-j are shorted. For another example, when the detection voltage V_Nd falls within a second defect diagnosis range corresponding to the upper limit of the reference range △Vth_2 or more and the voltage Vs or less, the control unit 33 may diagnose a defect that that the power supply and the ground are shorted.

Although the embodiments of the present disclosure have been described in detail above, the scope of the present disclosure is not limited thereto, and various modifications and improvements made by a person of an ordinary skill in the field to which the present disclosure pertains also belong to the scope of the present disclosure.

**Claims**

1. A battery pack comprising:

   a detection voltage measurement unit comprising a first resistor and a second resistor connected in series between a power supply supplying a certain voltage and a ground terminal, a case surrounding the first resistor and the second resistor, and a variable resistor connected in parallel between one end and the other end of the second resistor and located outside the case; and
   a coolant leakage diagnosis unit configured to diagnose a leakage of a coolant when a detection voltage of a contact point of the first resistor and the second resistor falls within a reference range calculated based on a conductivity of the coolant.

2. The battery pack of claim 1, wherein:

the variable resistor includes
a first detection node connected to the one end and a second detection node spaced apart from the first detection node by a certain distance and connected to the other end,
wherein the first detection node and the second detection node are electrically connected to each other by the coolant.

3. The battery pack of claim 1, wherein:

the coolant leakage diagnosis unit is configured to
diagnose a non-leakage of the coolant when a magnitude of the detection voltage corresponds to a first reference value that is a certain voltage greater than a maximum value of the reference range.

4. The battery pack of claim 3, wherein:

the coolant leakage diagnosis unit further includes
a control unit configured to diagnose whether the coolant leaks based on the magnitude of the detection voltage; and
an RC filter circuit configured to receive the detection voltage and transmit the detection voltage to the control unit.

5. The battery pack of claim 4, further comprising:

a plurality of detection voltage measurement units,
wherein the plurality of detection voltage measurement units are installed by being spaced from one another by a certain distance from a bottom surface to a top surface of the battery pack.

6. The battery pack of claim 1, wherein:

the detection voltage measurement unit further includes
a first capacitor connected between a contact point between the power supply and the first resistor and the ground terminal.

7. A vehicle system comprising:

a vehicle control unit configured to set a reference range which is a reference for determining a leakage of a coolant based on a conductivity of the coolant; and
a battery pack configured to diagnose the leakage of the coolant based on the reference range,
wherein the battery pack comprises
a detection voltage measurement unit comprising a first resistor and a second resistor connected in series between a power supply supplying a certain voltage and a ground terminal, a case surrounding the first resistor and the second resistor, and a variable resistor connected in parallel between one end and the other end of the second resistor and located outside the case; and
a coolant leakage diagnosis unit configured to diagnose the leakage of the coolant when a detection voltage of a contact point of the first resistor and the second resistor falls within the reference range calculated based on the conductivity of the coolant.

8. The vehicle system of claim 7, wherein:

the variable resistor includes
a first detection node connected to the one end and a second detection node spaced apart from the first detection node by a certain distance and connected to the other end,
wherein the first detection node and the second detection node are electrically connected to each other by the coolant.

9. The vehicle system of claim 7, wherein:

the coolant leakage diagnosis unit is configured to

diagnose a non-leakage of the coolant when a magnitude of the detection voltage corresponds to a first reference value that is a certain voltage greater than a maximum value of the reference range.

10. The vehicle system of claim 7, wherein:

the coolant leakage diagnosis unit further includes
a control unit configured to diagnose whether the coolant leaks based on the magnitude of the detection voltage; and
an RC filter circuit configured to receive the detection voltage and transmit the detection voltage to the control unit.

# FIG. 1

VEHICLE SYSTEM

100

COOLANT LEAKAGE DIAGNOSIS UNIT — 30

VEHICLE CONTROL UNIT — 13

DETECTION VOLTAGE MEASUREMENT UNIT — 20

VEHICLE COMMUNICATION UNIT — 11

COOLANT STORAGE DEVICE — 10

# FIG. 2

COOLANT LEAKAGE DIAGNOSIS UNIT

DETECTION VOLTAGE MEASUREMENT UNIT

DETECTION VOLTAGE MEASUREMENT UNIT

. . .

DETECTION VOLTAGE MEASUREMENT UNIT

30

20-1

20-2

20-n

COOLANT STORAGE DEVICE

EP 4 618 230 A1

# FIG. 3

# FIG. 4

# FIG. 5

## INTERNATIONAL SEARCH REPORT

International application No.

**PCT/KR2024/000478**

### A. CLASSIFICATION OF SUBJECT MATTER

**H01M 10/42**(2006.01)i; **H01M 10/48**(2006.01)i; **B60L 3/00**(2006.01)i; **B60L 58/10**(2019.01)i

According to International Patent Classification (IPC) or to both national classification and IPC

### B. FIELDS SEARCHED

Minimum documentation searched (classification system followed by classification symbols)

H01M 10/42(2006.01); A47L 15/46(2006.01); G01M 3/16(2006.01); H01M 10/48(2006.01); H01M 50/503(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 팩 (battery pack), 저항 (resistance), 누수 (leak), 냉각수 (coolant), 감지 (sense)

### C. DOCUMENTS CONSIDERED TO BE RELEVANT

| Category* | Citation of document, with indication, where appropriate, of the relevant passages | Relevant to claim No. |
|---|---|---|
| A | KR 10-2019-0109111 A (LG CHEM, LTD.) 25 September 2019 (2019-09-25)<br>See abstract; claim 1; and figures 1-8. | 1-10 |
| A | KR 10-1998-0013892 A (LG ELECTRONICS INC.) 15 May 1998 (1998-05-15)<br>See abstract; claims 1-3; and figures 4-6. | 1-10 |
| A | KR 10-2021-0108876 A (SAMSUNG SDI CO., LTD.) 03 September 2021 (2021-09-03)<br>See entire document. | 1-10 |
| A | JP 2014-190722 A (MITSUBISHI MOTORS CORP. et al.) 06 October 2014 (2014-10-06)<br>See entire document. | 1-10 |
| A | KR 10-2017-0130902 A (LG CHEM, LTD.) 29 November 2017 (2017-11-29)<br>See entire document. | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 April 2024** | **17 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000478**

| Patent document cited in search report | | | Publication date (day/month/year) | Patent family member(s) | | | Publication date (day/month/year) |
|---|---|---|---|---|---|---|---|
| KR | 10-2019-0109111 | A | 25 September 2019 | KR | 10-2380441 | B1 | 29 March 2022 |
| KR | 10-1998-0013892 | A | 15 May 1998 | | None | | |
| KR | 10-2021-0108876 | A | 03 September 2021 | CN | 113314771 | A | 27 August 2021 |
| | | | | EP | 3872889 | A1 | 01 September 2021 |
| | | | | EP | 3872889 | B1 | 23 August 2023 |
| | | | | KR | 10-2586103 | B1 | 05 October 2023 |
| | | | | US | 11764409 | B2 | 19 September 2023 |
| | | | | US | 2021-0265672 | A1 | 26 August 2021 |
| JP | 2014-190722 | A | 06 October 2014 | JP | 6137458 | B2 | 31 May 2017 |
| KR | 10-2017-0130902 | A | 29 November 2017 | KR | 10-2123673 | B1 | 16 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230079238